# EUROPÄISCHE PATENTSCHRIFT

(11) **EP 3 175 467 B1**
(45) Veröffentlichungstag und Bekanntmachung des Hinweises auf die Patenterteilung: **06.06.2018**
(21) Anmeldenummer: 15742199.1
(22) Anmeldetag: 13.07.2015
(51) Int. Cl.: H01H 9/00, H01H 3/58, H01H 3/32

(54) **MOTORANTRIEB**
MOTOR DRIVE
ENTRAÎNEMENT PAR MOTEUR

(30) Priorität: 29.07.2014 DE 102014110731
(43) Veröffentlichungstag der Anmeldung: 07.06.2017
(73) Patentinhaber: Maschinenfabrik Reinhausen GmbH, 93059 Regensburg (DE)
(72) Erfinder: JOBST, Johann, 93128 Regenstauf (DE); GOSS, Michael, 93180 Deuerling (DE); PIRCHER, Christian, 93138 Lappersdorf (DE)
(86) Internationale Anmeldenummer: PCT/EP2015/065963
(87) Internationale Veröffentlichungsnummer: WO 2016/015986

(56) Entgegenhaltungen:
- WO-A1-2012/135213
- DE-C1- 19 707 528
- US-A- 2 693 573
- US-A1- 2002 094 702
- US-A1- 2005 061 641

## Beschreibung

Die vorliegende Erfindung betrifft einen Motorantrieb mit Stellungsanzeige zur Betätigung eines Laststufenschalters oder Umstellers.

Zur Änderung des Übersetzungsverhältnisses eines ölisolierten Transformators unter Last werden je nach Einsatzzweck so genannte Stufenschalter bzw. Laststufenschalter oder Umstellter vorgesehen, deren jeweiliger Aufbau und Funktionsweise prinzipiell bekannt sind und die zur Beschaltung der Wicklungsanzapfungen einer Stufenwicklung eines Transformators ausgebildet sind.

Ein derartiger, an die Stufenwicklung angeschlossener Laststufenschalter, weist üblicherweise einen Lastumschalter und einen Wähler auf, wobei der Wähler vorzugsweise aus einem Vorwähler und einem Feinwähler besteht. Der Feinwähler ist zur leistungslosen Auswahl der anzuschließenden Wicklungsanzapfung der Stufenwicklung und der Vorwähler zur Vergrößerung des Regelbereiches vorgesehen, wobei der Vorwähler je nach Anwendungsfall entweder als Wender zur Zu- und Gegenschaltung der Stufenwicklung oder als Grobwähler zur Anlenkung der Stufenwicklung an den Anfang oder das Ende der Stammwicklung des Transformators ausgebildet sein kann.

Die Lastumschaltung selbst erfolgt durch den Lastumschalter des Laststufenschalters, und zwar von der bisherigen auf die neue, vorgewählte Wicklungsanzapfung der Stufenwicklung des Transformators. Hierzu weist der Lastumschalter üblicherweise mechanische Schaltkontakte und Widerstandskontakte auf, wobei die Schaltkontakte zur direkten Verbindung der jeweiligen Wicklungsanzapfungen mit der Lastableitung und die Widerstandskontakte zur kurzzeitigen Überbrückung mittels eines oder mehrerer Überschaltwiderstände dienen. Die Entwicklungen der letzten Jahre führen jedoch weg von Lastumschaltern mit mechanischen Schaltkontakten und hin zur Verwendung von Vakuumschaltröhren oder Halbleiterschaltelementen, insbesondere Leistungsschaltelementen als Schaltelemente für hohe Spannungen und Ströme, z.B. Thyristoren, GTO's, IGBT's und andere Bauelemente.

Eine weitere Gattung der Laststufenschalter bilden die integrierten Laststufenschalter, auch Lastwähler genannt. Hier sind der Lastumschalter und der Feinwähler in einer Einheit verbaut. Beim Betätigen wird in einem Schritt die zu beschaltende Wicklungsanzapfung vorgewählt und anschließend beschaltet. Auch diese Realisierungsform eines Laststufenschalters kann einen Vorwähler aufweisen, der entweder außerhalb oder im Gehäuse des Laststufenschalters angeordnet ist, und zwar in einem Isoliermedium, vorzugweise Isolieröl.

Umsteller für Stufentransformatoren hingegen dienen der leistungslosen, d.h. spannungs- bzw. stromlosen Umschalten zwischen verschiedenen Wicklungsanzapfungen des am Umsteller angeschlossenen Stufentransformators.

Ein derartiger Umsteller besteht im Wesentlichen aus mehreren kreisförmig um eine zentrale Mittellängsachse angeordneten Kontaktstäben und einer zentralen, drehbar gelagerten Schaltwelle, an der eine Kontaktanordnung befestigt ist. Die Kontaktanordnung dient der elektrischen Kontaktierung von zwei zueinander, vorzugsweise benachbarten, Kontaktstäben, um dadurch ein definiertes Transformationsverhältnis des mit dem Umsteller verbundenen Transformators zu bewirken.

Zur Betätigung von Laststufenschaltern als auch Umstellern sind diese in der Regel mittels eines Gestänges mit einem Motorantrieb verbunden, der zur Einstellung des Laststufenschalters bzw. Umstellers auf die jeweils gewünschte Betriebsstellung dient. Im Motorantrieb sind alle wesentlichen mechanischen und elektrischen Baugruppen, die zum Antrieb des Laststufenschalter bzw. Umstellers notwendig sind, vereinigt. Unter anderem umfasst ein derartiger Motorantrieb auch eine Stellungsanzeige mit einem Schaltschrittzeiger und einem Stellungszeiger, die beide mittels eines Steuer- und/oder Anzeigegetriebes betätigt werden. Der Stellungszeiger repräsentiert dabei die aktuell beschaltete Stellung des Laststufenschalters bzw. Umschalters, wo hingegen der Schaltschrittzeiger indiziert, ob eine angestoßene Umschaltung tatsächlich vollständig vollzogen wurde. In einem solchen Fall hat der Schaltschrittzeiger eine komplette 360° Drehung durchlaufen. Ein Motorantrieb zur Betätigung eines Laststufenschalters gemäß dem Oberbegriff des Anspruchs 1 ist aus WO 2012/135213 A1 bekannt. Dabei ist im Stand der Technik der gesamte Antriebsstrang vom Laststufenschalter bzw. Umsteller bis hin zu der Stellungsanzeige im Motorantrieb als ein durchgängiger Antriebsstrang ausgebildet, der eine kinematische Zwangsbewegung aller innerhalb dieses Antriebsstrangs vorgesehenen einzelnen Baugruppen bedingt. Wird nun zu Revisionszwecken der Laststufenschalter oder Umsteller in gewissen Zeitabständen ausgebaut und gewartet, so muss nach dem Wiedereinbau sichergestellt sein, dass die aktuell beschaltete Stellung des Laststufenschalters bzw. Umstellers nach wie vor der aktuell angezeigten Stellung der Stellungsanzeige im Motorantrieb entspricht. Mit anderen Worten müssen also die Schaltstellung des Laststufenschalters oder Umstellers und die der Stellungsanzeige deckungsgleich sein. Hierzu ist es im Stand der Technik erforderlich, das mit dem Motorantrieb im Betrieb fest verbundene Gestänge, das zum Laststufenschalter bzw. Umsteller führt, zu lösen, d. h. abzubauen, und händisch den Motorantrieb so lange laufen zu lassen, bis die an der Stellungsanzeige angezeigte Schaltstellung der tatsächlich vom Laststufenschalter bzw. Umsteller beschalteten Stellung entspricht. Diese händische Neujustierung ist dabei zeitaufwändig und fehleranfällig.

Aufgabe der Erfindung ist es, einen Motorantrieb zur Betätigung eines Laststufenschalters oder Umstellers anzugeben, der die zuvor genannten Nachteile beseitigt.

Diese Aufgabe wird durch einen Motorantrieb gemäß dem unabhängigen Anspruch 1 gelöst. Vorteilhafte Weiterbildungen und Ausführungsformen der Erfindung sind in den abhängigen Ansprüchen beschrieben

Die Erfindung schlägt einen Motorantrieb zur Betätigung eines Laststufenschalters oder Umstellers vor, wobei dieser einen Antriebsmotor aufweist, der wenigstens ein Lastgetriebe und ein Anzeigegetriebe antreibt, wobei das Lastgetriebe eine erste Antriebswelle mit einer mit ihr mechanisch verbundenen ersten Antriebsscheibe aufweist, die mit dem Antriebsmotor verbunden ist, und eine zweite Antriebswelle mit einer mit ihr verbundenen zweiten Antriebsscheibe aufweist, wobei die erste und zweite Antriebsscheibe mechanisch gekoppelt sind, wobei die zweite Antriebswelle ihrerseits wiederum auf ihrer ersten Seite mit dem Laststufenschalter oder dem Umsteller in Wirkverbindung steht und mit ihrer zweiten Seite mit dem Anzeigegetriebe verbindbar ist, wobei das Anzeigegetriebe mit einer Stellungsanzeige zusammenwirkt, mittels der die aktuell beschaltete Stellung des Laststufenschalters oder Umstellers darstellbar ist und wobei zwischen der Stellungsanzeige und dem Lastgetriebe eine schaltbare Kupplungseinrichtung vorgesehen ist.

Besonders bevorzugt ist die Kupplungseinrichtung derart schaltbar ausgebildet ist, dass im ausgekuppelten Zustand die Stellungsanzeige kinematisch von der einleitenden Drehbewegung des Antriebsmotors abgetrennt ist und im eingekuppelten Zustand die Stellungsanzeige mit der einleitenden Drehbewegung des Antriebsmotors kinematisch zwangsgekoppelt ist.

Nochmals bevorzugt umfasst die Kupplungseinrichtung ein drehfest an einer eintreibendenden Welle angeordnetes erstes Kupplungszahnrad, ein drehfest und parallel zum ersten Kupplungszahnrad an einer Antriebswelle angeordnetes zweites Kupplungszahnrad und einen parallel zu der eintreibendenden Welle angeordneten und axial verschiebbaren Kupplungsbolzen mit einem an dem Kupplungsbolzen drehfest und mit dem ersten und zweiten Kupplungszahnrad in Verzahnungseingriff bringbaren dritten Kupplungszahnrad.

Vorteilhafter Weise ist der Kupplungsbolzen zwischen einer Einkuppelposition, bei der das dritte Kupplungszahnrad mit dem ersten und zweiten Kupplungszahnrad in Verzahnungseingriff steht, und einer Auskuppelposition, bei der das dritte Kupplungszahnrad ausschließlich mit dem ersten Kupplungszahnrad in Verzahnungseingriff steht, axial verschiebbar.

Nach einer alternativen Ausführungsform umfasst die Kupplungseinrichtung eine eintreibende Welle mit einer zwischen einem Anschlagselement und einer Konusbuchse angeordneten Druckfeder, eine Abtriebswelle mit einem zur Konusbuchse hin zugewandten kegelstumpfförmigen Ende, die zwischen der eintreibenden Welle und der Antriebswelle axial verschiebbare Konusbuchse mit einer umlaufenden Nut, und einen axial verschiebbaren Kupplungsbolzen, der mittels einer Verbindungsgabel in die Konusbuchse eingreift.

Weiterhin vorteilhaft ist der Kupplungsbolzen zwischen einer Einkuppelposition, bei der die Konusbuchse mit dem kugelstumpfförmigen Ende der Antriebswelle reibschlüssig in Verbindung steht, und einer Auskuppelposition, bei die Konusbuchse mittels der Verbindungsgabel in Richtung des Anschlages verschoben wird, so dass sich die reibschlüssige Verbindung löst, axial verschiebbar.

Nochmals bevorzugt ist eine Ausnehmung in der Konusbuchse vorgesehen, in die ein an der eintreibenden Welle angeordneter Bolzen greift, derart, dass im Falle einer Rotationsbewegung der eintreibenden Welle der Bolzen das Drehmoment auf die Konusbuchse überträgt, indem sich der Bolzen mit seiner äußeren Mantelfläche an der Innenseite der Ausnehmung abstützt.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen. Die Zeichnungen zeigen in
- FIG. 1: eine schematische Darstellung eines erfindungsgemäßen Motorantriebs mit einem über ein Gestänge verbundenen Laststufenschalter bzw. Umsteller
- FIG.2: eine seitliche Darstellung einer Detailansicht einer Ausführungsform eines erfindungsgemäßen Motorantriebs
- FIG.3: eine seitliche Darstellung einer Detailansicht einer weiteren Ausführungsform eines erfindungsgemäßen Motorantriebs.

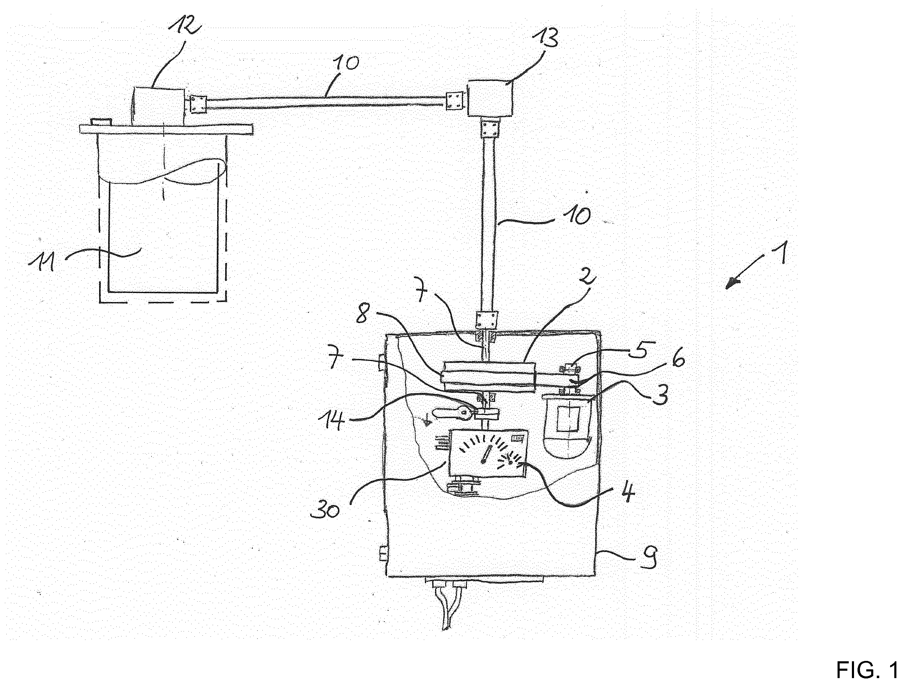

In der FIG. 1 ist ein erfindungsgemäßer Motorantrieb 1 mit einem über ein Gestänge verbundenen Laststufenschalter bzw. Umsteller schematisch dargestellt. Aus Übersichtlichkeitsgründen sind nur funktionswesentliche Bauteile in den Figuren dargestellt und beschrieben. Der Motorantrieb 1 umfasst dabei unter anderem ein Lastgetriebe 2, einen Antriebsmotor 3 und eine Stellungsanzeige 4 mit wenigstens einem hier nicht näher dargestellten Anzeigegetriebe 30. Das Anzeigegetriebe 30 kann auch als Steuergetriebe ausgebildet sein. Alle vorgenannten Bauteile des Motorantriebs 1 sind innerhalb eines gemeinsamen Gehäuses 9 angeordnet. Im Inneren des Lastgetriebes 2 befindet sich eine erste vom Antriebsmotor 3 angetriebene Antriebswelle 5 die mit einer ersten Antriebsscheibe 6 mechanisch verbunden ist. Desweiteren befindet sich ebenfalls im Inneren des Lastgetriebes 2 eine zweite Antriebswelle 7, die mit einer zweiten Antriebsscheibe 8 mechanisch verbunden ist. Die erste und zweite Antriebsscheibe 6 und 8 können dabei als Zahnräder ausgebildet sein, die ineinandergreifen. Alternativ ist es auch denkbar, dass die beiden Antriebsscheiben 6 und 8 über einen gemeinsamen, über die Stirnseiten der Antriebsscheiben 6 und 8 gespannten Riemen angetrieben werden. Dem Fachmann sind diesbezüglich mehrere Alternativen bekannt, die hier zum Einsatz gelangen können. Über den mechanischen Kraftschluss der zweiten Antriebsscheibe 8 mit der zweiten Antriebswelle 7 steht die zweite Antriebswelle 7 ihrerseits wiederum auf ihrer ersten Seite mit einem Laststufenschalter oder einem Umsteller 11 in Wirkverbindung und ist mit ihrer zweiten Seite mit dem Anzeigegetriebe 30 verbindbar. Die mechanische Verbindung zwischen dem Laststufenschalter oder Umsteller 11 und der zweiten Antriebswelle 7 wird mittels eines Gestänges 10 und zwischengeschalteten Getriebestufen 12 und 13 realisiert. Da diese Art der Kopplung mittels eines Gestänges 10 und verschiedener Getriebestufen 12 und 13 dem Fachmann aus dem Stand der Technik bereits seit Jahrzehnten bekannt ist, wird hierauf nicht näher eingegangen. Wesentlich dabei ist, dass mittels des Gestänges 10 einschließlich der Getriebestufen 12 und 13 ein kinematischer Kraftschluss zwischen der ersten Seite der zweiten Antriebswelle 7 und dem Laststufenschalter oder Umsteller 11 erfolgt, der auch als Antriebsstrang bezeichnet wird.

Die zweite Seite der zweiten Antriebswelle 7 ist über eine schaltbare Kupplungseinrichtung 14 mit dem Anzeigegetriebe 30 und der Stellungsanzeige 4 verbindbar. Die Kupplungseinrichtung 14, das Anzeigegetriebe 30 sowie die Stellungsanzeige 4 werden in den nachfolgenden Figuren noch detaillierter erläutert. Die Kupplungseinrichtung 14 ist dabei derart ausgebildet, dass sie die mittels der zweiten Antriebswelle 7 an sich auf das Anzeigegetriebe 30 eingeleitete Drehbewegung unterbrechen kann, so dass sich bei laufendem Antriebsmotor 3 nur mehr der Antriebsstrang dreht und die Schaltstellung des Laststufenschalters oder Umstellers 11 ändert, nicht jedoch die der Stellungsanzeige 4. Alternativ ist es auch möglich, die Schaltstellung der Stellungsanzeige 4 durch Drehen am Schaltschrittzeiger 27 zu verändern. Dies kann händisch oder motorgesteuert erfolgen. Dafür kann beispielsweise im Anzeigegetriebe 30 der Stellungsanzeige 4 ein weiterer Elektromotor vorgesehen sein, der mit dem Anzeigegetriebe 30 zusammenwirkt, so dass sich damit letzten Endes der Schaltschrittzeiger 27 und Stellungszeiger 36 drehen.

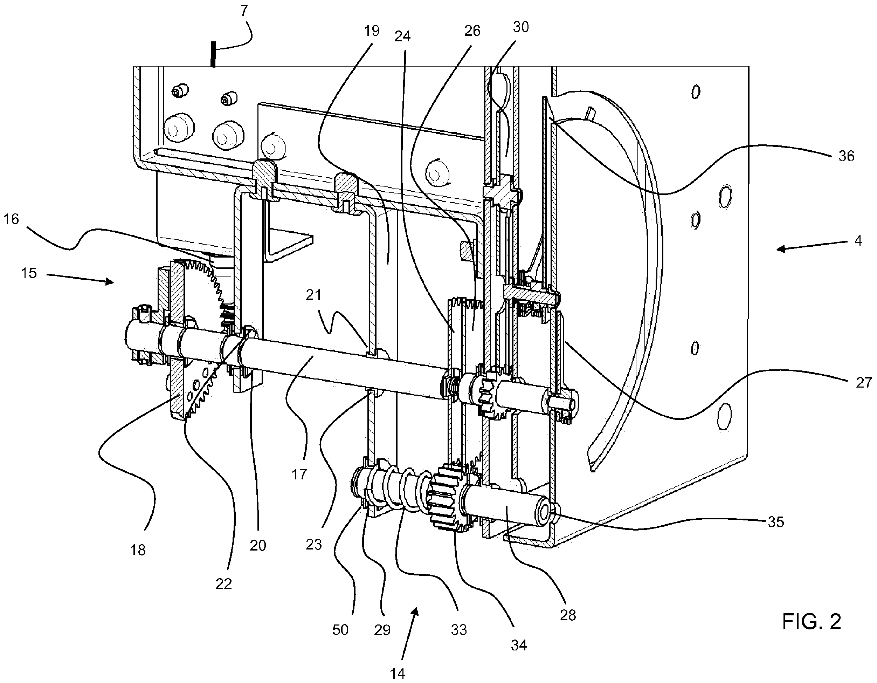

In Figur 2 ist eine Ausführungsform der Erfindung in einer Seitenansicht dargestellt, bei der die Kupplungseinrichtung 14 im Detail gezeigt ist. In dieser Ausführungsform ist der Kupplungseinrichtung 14 ein Schneckenradgetriebe 15, umfassend ein Schneckenrad 16 sowie ein an einer eintreibenden Welle 17 drehfest angeordnetes Zahnrad 18, vorgeschaltet. Die auf das Schneckenrad 16 eingeleitete Drehbewegung erfolgt dabei über die zweite Antriebswelle 7 und wird von dieser abgegriffen. Das Schneckenradgetriebe 15 sorgt damit unter anderem für eine Verlagerung der Bewegungsrichtung der Drehbewegung der zweiten Antriebswelle 7. Die eintreibende Welle 17 wird ihrerseits wiederum gehalten durch einen im Wesentlichen U-förmig ausgebildeten Haltebügel 19, der im inneren des Gehäuses 9 des Motorantriebs 1 angeordnet ist. Hierfür sind an dem Haltebügel 19 Lageraufnahmestellen 20 und 21 vorgesehen, in die jeweils ein als beispielsweise Wälzlager ausgebildetes Lager 22 und 23 einsetzbar ist. Die eintreibende Welle 17 wird mittels der Lager 22 und 23 drehbar gelagert aufgenommen. An dem, dem Schneckenradgetriebe 15 gegenüberliegenden Ende der eintreibenden Welle 17 ist drehfest ein erstes Kupplungszahnrad 24 angeordnet. In axialer Verlängerung der eintreibenden Welle 17 ist stirnseitig zu dem ersten Kupplungszahnrad 24 eine Antriebswelle 25 des Anzeigegetriebes 30 vorgesehen, auf der ein zweites Kupplungszahnrad 26 im wesentlichen dem ersten Kupplungszahnrad 24 parallel gegenüberliegend und drehfest an der Antriebswelle befestigt ist. Am anderen Ende der Antriebswelle 25 ist ein Schaltschrittzeiger 27 der Stellungsanzeige 4 befestigt. Im wesentlichen parallel zu der eintreibenden Welle 17 ist zudem ein Kupplungsbolzen 28 vorgesehen, der ebenfalls mittels einer in dem Haltebügel 19 vorgesehenen weiteren Lageraufnahmestelle 29 und einem hierin angeordneten Lager 50 sowie einer in dem Anzeigegetriebe 30 vorgesehenen korrespondierenden Lageraufnahmestelle 31 samt Lager 32 drehbar gelagert geführt wird. Zudem sind auf dem Kupplungsbolzen 28 zwischen den beiden Lageraufnahmestellen 29 und 31 eine Druckfeder 33 und ein drittes Kupplungszahnrad 34 angeordnet. Dabei wird der Kupplungsbolzen 28 mittels der Druckfeder 33 im eingekuppelten Zustand unter einer gewissen Vorspannung gehalten. Das dritte Kupplungszahnrad 34 kann auf dem Kupplungsbolzen 28 drehbar gelagert angeordnet sein. An dem, dem Schrittschaltgetriebe 30 zugeordneten Ende weist der Kupplungsbolzen 28 eine Öffnung 35, beispielsweise in Form eines Sacklochs, auf. Der Kupplungsbolzen 28 ist dabei derart ausgebildet, dass er entgegen der Federkraft der Druckfeder 33 in Richtung der Lageraufnahmestelle 29 bewegbar ist, in dem beispielsweise mittels eines Werkzeugs in die Öffnung gedrückt wird. Das dritte Kupplungszahnrad 34 ist in seiner Breite so bemessen, dass es im eingekuppelten Zustand, der in Figur 2 gezeigt ist, mit den beiden ersten und zweiten Kupplungszahnrädern 24 und 26 in Verzahnungseingriff steht. Damit wird die Drehbewegung der eintreibenden Welle 17 mit der Kupplungseinrichtung 14 auf die Antriebswelle 25 weitergeleitet, so dass sich damit letzten Endes der Schaltschrittzeiger 27 bei erfolgter Umschaltung um vorzugsweise 360° drehen kann.

Wird nun mittels eines Werkzeugs der Kupplungsbolzen 28 entgegen der Federkraft der Druckfeder 33 in Richtung der Lageraufnahmestelle 29 gedrückt, so gelangt damit das zweite Kupplungszahnrad 26 außer Verzahnungseingriff mit dem dritten Kupplungszahnrad 34, sodass damit letzten Endes die Antriebswelle 25 von der einleitenden Drehbewegung des Antriebsmotors 3 für die Umschaltung entkoppelt ist und sich der Schaltschrittzeiger 27 nicht dreht. Alternativ lässt sich auf der Schaltschrittzeiger 27 auf die beschriebene Art und Weise drehen, so dass damit letzten Endes der Stellungszeiger 36 seine anzeigbare Stellung verändert. Damit ist es in dieser Stellung der Kupplungseinrichtung 14 nach einer erfolgten Revision des Laststufenschalters oder Umstellers 11 auf einfache Art und Weise möglich, den Motorantrieb 1 so lange laufen zu lassen, bis die an der Stellungsanzeige 4 angezeigte Schaltstellung der tatsächlich vom Laststufenschalter bzw. Umsteller 11 beschalteten Stellung entspricht. Dabei repräsentiert an der Stellungsanzeige 4 ein Stellungszeiger 36 die jeweils aktuell beschaltete Stellung des Laststufenschalters oder Umstellers 11, wo hingegen der Schaltschrittzeiger 27 bei jeder vollständig durchlaufenen Umschaltung eine komplette 360° Umdrehung überstreicht und damit die Vollständigkeit der vollzogenen Umschaltung auf die nächste angewählte Schaltstellung des Laststufenschalters oder Umstellers 11 bestätigt. Die Stellungsanzeige (4) sowie das Anzeigegetriebe (30) sind Gegenstand der auf die Anmelderin zurückgehenden DE 197 07528 C1. Diesbezügliche Textpassagen werden ausdrücklich durch Verweis zum Gegenstand dieser Beschreibung erklärt. Insbesondere wird in diesem Zusammenhang auf die Figuren 1 und 2 der zitierten deutschen Patentschrift und deren dazugehörigen Figurenbeschreibung verwiesen.

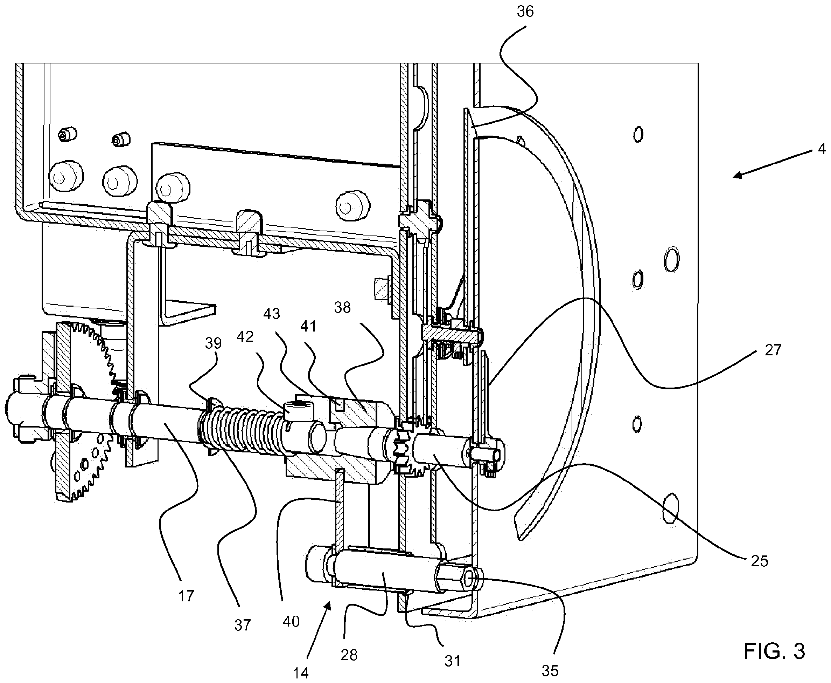

In FIG. 3 ist eine weitere Ausführungsform der Erfindung in einer Seitenansicht dargestellt. Es werden nachfolgend im Wesentlichen nur die Unterschiede zu der Ausführungsform der Erfindung der FIG. 2 beschrieben. Dabei werden gleiche oder gleichwirkende Elemente der Erfindung mit identischen Bezugszeichen angesprochen. Die mittels des Schneckenradgetriebes 15 umgelenkte und übersetzte Drehbewegung erfolgt auf die eintreibende Welle 17, die auf der dem Zahnrad 18 gegenüberliegenden Seite eine Druckfeder 37 und stirnseitig eine Konusbuchse 38, beispielweise in Form einer Klemmnabe, aufnimmt. Die Konusbuchse 38 ist dabei derart ausgebildet, dass sie im eingekuppelten Zustand des Kupplungsgetriebes 14, der in FIG. 3 dargestellt ist, mittels der Druckfeder 37 in Richtung der Antriebswelle 25 gedrückt wird. Dafür stützt sich die Druckfeder 37 auf der der Konusbuchse 38 gegenüberliegenden Seite an einem Anschlagselement 39 ab. Die Konusbuchse 38 selbst, die in FIG. 3 im Querschnitt gezeigt ist, bildet mit der eintreibenden Welle 17 einen koaxialen Aufbau, derart, dass die Konusbuchse 38 entgegen der Federkraft der Druckfeder 37 entlang der eintreibenden Welle 17 auf dieser verschoben werden kann. Die Rotationsbewegung der eintreibenden Welle 17 wird auf die Konusbuchse 38 übertragen, indem in der Konusbuchse 38 eine Ausnehmung 43 vorgesehen ist, in die ein an der eintreibenden Welle 17 angeordneter Bolzen 42 greift, derart, dass der Bolzen das Drehmoment auf die Konusbuchse 38 übertragt, indem er sich mit seiner äußeren Mantelfläche an der Innenseite der Ausnehmung 43 abstützt. Gleichzeitig ist es durch die geometrische Formgebung der Ausnehmung 43 auch möglich, einen Anschlag für die axiale Verschiebbarkeit der Konusbuchse 38 zu definieren, da der Bolzen 42 auch hier mit seiner Mantelfläche mit der Innenseite der Ausnehmung 43 zusammenwirkt. Zudem wird innerhalb der Konusbuchse 38, stirnseitig zu der eintreibenden Welle 17 und zu dieser flüchtend, die Antriebswelle 25, die hier als Konuswelle mit kegelstumpfförmigem Ende ausgebildet ist, aufgenommen. Auch hier ist im Wesentlichen parallel zu der eintreibenden Welle 17 der Kupplungsbolzen 28 in der Lageraufnahmestelle 31 des Anzeigegetriebes 4 aufgenommen und mechanisch geführt. Der Kupplungsbolzen 28 weist zudem eine Verbindungsgabel 40 auf, die an dem, der Öffnung 35 gegenüberliegenden Ende, beispielsweise mit einer Schraubverbindung, lösbar befestigt ist. Weiterhin greift die Verbindungsgabel 40 in eine an der Konusbuchse 38 vorgesehene, umfangsseitig angeordnete umlaufende Nut 41 ein.

Im hier in FIG. 3 dargestellten eingekoppelten Zustand der Kupplungseinrichtung 14 bilden die Konusbuchse 38 und die Antriebswelle 25 mit ihrem kegelstumpfförmigen Ende eine reibschlüssige Verbindung, so dass die über das Schneckenradgetriebe 15 eingeleitete Drehbewegung auf das Anzeigegetriebe 4 übertragen wird. Wird nun beispielsweise mittels eines Werkzeugs der Kupplungsbolzen 28 mit seiner Verbindungsgabel 40 samt Konusbuchse 38 entgegen der Federkraft der Druckfeder 37 in Richtung des Anschlagelements 39 gedrückt, so gelangt damit die reibschlüssige Verbindung zwischen der Konusbuchse 38 und der Antriebswelle 25 außer Eingriff. Damit ist das Anzeigegetriebe 4 kinematisch von der eintreibenden Welle 17 getrennt und es kann beispielsweise der Schaltschrittzeiger 27 frei gedreht werden. Wird der Kupplungsbolzen 28 losgelassen, federt die Konusbuchse 38 auf die Konuswelle zurück und die eintreibende Welle 17 ist somit wieder reibschlüssig mit dem Anzeigegetriebe 4 verbunden, womit der kinematische Kraftschluss wieder hergestellt ist.

### Bezugszeichen

- 1: Motorantrieb
- 2: Lastgetriebe
- 3: Antriebsmotor
- 4: Stellungsanzeige
- 5: erste Antriebswelle
- 6: erste Antriebsscheibe
- 7: zweite Antriebswelle
- 8: zweite Antriebsscheibe
- 9: Gehäuse
- 10: Gestänge
- 11: Laststufenschalter oder Umsteller
- 12: Getriebestufe
- 13: Getriebestufe
- 14: Kupplungseinrichtung
- 15: Schneckenradgetriebe
- 16: Schneckenrad
- 17: eintreibende Welle
- 18: Zahnrad
- 19: Haltebügel
- 20: Lageraufnahmestelle
- 21: Lageraufnahmestelle
- 22: Lager
- 23: Lager
- 24: erstes Kupplungszahnrad
- 25: Antriebswelle
- 26: zweites Kupplungszahnrad
- 27: Schaltschrittzeiger
- 28: Kupplungsbolzen
- 29: Lageraufnahmestelle
- 30: Anzeigegetriebe
- 31: Lageraufnahmestelle
- 32: Lager
- 33: Druckfeder
- 34: Kupplungszahnrad
- 35: Öffnung
- 36: Stellungszeiger
- 37: Druckfeder
- 38: Konusbuchse
- 39: Anschlagselement
- 40: Verbindungsgabel
- 41: Nut
- 42: Bolzen
- 43: Ausnehmung
- 50: Lager

## Patentansprüche

1. Motorantrieb (1) zur Betätigung eines Laststufenschalters oder Umstellers (11), wobei dieser einen Antriebsmotor (3) aufweist, der wenigstens ein Lastgetriebe (2) und ein Anzeigegetriebe (30) antreibt,
wobei das Lastgetriebe (2) eine erste Antriebswelle (5) mit einer mit ihr mechanisch verbundenen ersten Antriebsscheibe (6) aufweist, die mit dem Antriebsmotor (3) verbunden ist, und eine zweite Antriebswelle (7) mit einer mit ihr verbundenen zweiten Antriebsscheibe (8) aufweist,
wobei die erste und zweite Antriebsscheibe (6 und 8) mechanisch gekoppelt sind,
wobei die zweite Antriebswelle (7) ihrerseits wiederum auf ihrer ersten Seite mit dem Laststufenschalter oder dem Umsteller (11) in Wirkverbindung steht und mit ihrer zweiten Seite mit dem Anzeigegetriebe (30) verbindbar ist,
wobei das Anzeigegetriebe (30) mit einer Stellungsanzeige (4) zusammenwirkt, mittels der die aktuell beschaltete Stellung des Laststufenschalters oder Umstellers (11) darstellbar ist, **dadurch gekennzeichnet, dass** zwischen der Stellungsanzeige (4) und dem Lastgetriebe (2) eine schaltbare Kupplungseinrichtung (14) vorhanden ist.

2. Motorantrieb nach Anspruch 1,
wobei die Kupplungseinrichtung (14) derart schaltbar ausgebildet ist, dass im ausgekuppelten Zustand die Stellungsanzeige (4) kinematisch von der einleitenden Drehbewegung des Antriebsmotors (3) abgetrennt ist und im eingekuppelten Zustand die Stellungsanzeige (4) mit der einleitenden Drehbewegung des Antriebsmotors (3) kinematisch zwangsgekoppelt ist.

3. Motorantrieb nach Anspruch 1 oder 2,
wobei die Kupplungseinrichtung (14) ein drehfest an einer eintreibendenden Welle (17) angeordnetes erstes Kupplungszahnrad (24), ein drehfest und parallel zum ersten Kupplungszahnrad (24) an einer Antriebswelle (25) angeordnetes zweites Kupplungszahnrad (26) und einen parallel zu der eintreibendenden Welle (17) angeordneten und axial verschiebbaren Kupplungsbolzen (28) mit einem an dem Kupplungsbolzen (28) drehfest und mit dem ersten und zweiten Kupplungszahnrad (24 bzw. 26) in Verzahnungseingriff bringbaren dritten Kupplungszahnrad (34) umfasst.

4. Motorantrieb nach Anspruch 3,
wobei der Kupplungsbolzen (28) zwischen einem Haltebügel (19) und dem dritten Kupplungszahnrad (34) eine Druckfeder (33) umfasst.

5. Motorantrieb nach einem der Ansprüche 3 oder 4,
wobei der Kupplungsbolzen (28) zwischen einer Einkuppelposition, bei der das dritte Kupplungszahnrad (34) mit dem ersten und zweiten Kupplungszahnrad (24 und 26) in Verzahnungseingriff steht, und einer Auskuppelposition, bei der das dritte Kupplungszahnrad (28) nur mit dem ersten Kupplungszahnrad (24) in Verzahnungseingriff steht, axial verschiebbar ist.

6. Motorantrieb nach einem der Ansprüche 3 bis 5,
wobei der Kupplungsbolzen (28) eine Öffnung (35) aufweist, die von außen zugänglich ist.

7. Motorantrieb nach einem der Ansprüche 3 bis 6,
wobei die Kupplungseinrichtung (14) eine eintreibende Welle (17) mit einer zwischen einem Anschlagselement (39) und einer Konusbuchse (38) angeordneten Druckfeder (37), eine Abtriebswelle (25) mit einem zur Konusbuchse (38) hin zugewandten kegelstumpfförmigen Ende, die zwischen der eintreibenden Welle (17) und der Antriebswelle (25) axial verschiebbare Konusbuchse (38) mit einer umlaufenden Nut (41), und einen axial verschiebbaren Kupplungsbolzen (28), der mittels einer Verbindungsgabel (40) in die Konusbuchse (38) eingreift, umfasst.

8. Motorantrieb nach Anspruch 7
wobei die Konusbuchse (38) als Klemmnabe ausgebildet ist.

9. Motorantrieb nach einem der Ansprüche 7 oder 8,
wobei die Antriebswelle (25) als Konuswelle ausgebildet ist.

10. Motorantrieb nach einem der Ansprüche 7 bis 9,
wobei der Kupplungsbolzen (28) zwischen einer Einkuppelposition, bei der die Konusbuchse (38) mit dem kugelstumpfförmigen Ende der Antriebswelle (25) reibschlüssig in Verbindung steht, und einer Auskuppelposition, bei die Konusbuchse (38) mittels der Verbindungsgabel (40) in Richtung des Anschlages (39) verschoben wird, so dass sich die reibschlüssige Verbindung löst, axial verschiebbar ist.

11. Motorantrieb nach einem der Ansprüche 7 bis 10, wobei eine Ausnehmung (43) in der Konusbuchse (38) vorhanden ist, in die ein an der eintreibenden Welle (17) angeordneter Bolzen (42) greift, derart, dass im Falle einer Rotationsbewegung der eintreibenden Welle (17) der Bolzen (42) das Drehmoment auf die Konusbuchse (38) überträgt, indem sich der Bolzen (42) mit seiner äußeren Mantelfläche an der Innenseite der Ausnehmung (43) abstützt.

## Claims

1. Motor drive (1) for actuation of an on-load tap changer or off-load tap changer (11), wherein this comprises a drive motor (3) which drives at least one load transmission (2) and indicator transmission (30),
wherein the load transmission (2) comprises a first drive shaft (5) with a first drive pulley (6), which is mechanically connected therewith and connected with the drive motor (3), and a second drive shaft (7) with a second drive pulley (8), which is connected therewith, wherein the first and second drive pulleys (6 and 8) are mechanically coupled,
wherein the second drive shaft (7) in turn is in operative connection at a first end thereof with the on-load tap changer or the off-load tap changer (11) and is connectible by a second end thereof with the indicator transmission (30),
wherein the indicator transmission (30) co-operates with a setting indicator (4), by means of which the currently activated setting of the on-load tap changer or off-load tap changer (11) can be indicated,
**characterised in that**
a switchable coupling device (14) is present between the setting indicator (4) and the load transmission (2).

2. Motor drive according to claim 1, wherein the coupling device (14) is constructed to be switchable in such a way that in the uncoupled state the setting indicator (4) is kinematically separated from the introduced rotational movement of the drive motor (3) and in the coupled state the setting indicator (4) is kinematically constrainedly coupled with the introduced rotational movement of the drive motor (3).

3. Motor drive according to claim 1 or 2, **characterised in that** the coupling device (14) comprises a first coupling gearwheel (24) arranged at a drive input shaft (17) to be secure against relative rotation, a second coupling gearwheel (26) arranged at a drive shaft (25) to be secure against relative rotation and to be parallel to the first coupling gearwheel (24) and an axially displaceable coupling pin (28), which is arranged parallel to the drive input shaft (17), with a third coupling gearwheel (34) which is secure against rotation relative to the coupling pin (28) and able to be brought into mesh with the first and second coupling gearwheels (24 and 26).

4. Motor drive according to claim 3, wherein the coupling pin (28) has a compression spring (33) between a mounting bracket (19) and the third coupling gearwheel (34).

5. Motor drive according to one of claims 3 and 4, wherein the coupling pin (28) is axially displaceable between a coupled position in which the third coupling gearwheel (34) is in mesh with the first and second coupling gearwheels (24 and 26) and an uncoupled position in which the third coupling gearwheel (28) is in mesh only with the first coupling gearwheel (24).

6. Motor drive according to one of claims 3 to 5, wherein the coupling pin (28) has an externally accessible opening (35).

7. Motor drive according to any one of the claims 3 to 6, wherein the coupling device (14) comprises a drive input shaft (17) with a compression spring (37) arranged between an abutment element (39) and a cone bush (38), an output drive shaft (25) with a frusto-conical end facing the cone bush (38), the cone bush (38) - which has an encircling groove (41) - being axially displaceable between the drive input shaft (17) and the drive shaft (25), and an axially displaceable coupling pin (28) engaged in the cone bush (38) by means of a connecting fork (40).

8. Motor drive according to claim 7, wherein the cone bush (38) is constructed as a clamping hub.

9. Motor drive according to one of claims 7 and 8, wherein the drive shaft (25) is constructed as a cone shaft.

10. Motor drive according to any one of claims 7 to 9, wherein the coupling pin (28) is axially displaceable between a coupled position in which the cone bush (38) is connected by friction couple with the frusto-conical end of the drive shaft (25) and an uncoupled position in which the cone bush (38) is displaced by means of the connecting fork (40) in the direction of the abutment (39) so that the connection by friction couple releases.

11. Motor drive according to any one of claims 7 to 10, wherein present in the cone bush (38) is a recess (43) in which a pin (42) arranged at the drive input shaft (17) so engages that in the case of rotational movement of the drive input shaft (17) the pin (42) transmits torque to the cone bush (38) through the pin (42) being supported by its outer circumferential surface on the inner side of the recess (43).

## Revendications

1. Entraînement motorisé (1) permettant d'actionner un commutateur à gradins en charge ou un ajusteur de tension (11), comprenant un moteur d'entraînement (3) qui entraîne au moins une transmission de charge (2) et une transmission d'indication (30), dans lequel
la transmission de charge (2) comprend un premier arbre d'entraînement (5) équipé d'un premier disque d'entraînement (6) relié mécaniquement à celui-ci et qui est relié au moteur d'entraînement (3) et un second arbre d'entraînement (7) équipé d'un second disque d'entraînement (8) relié à celui-ci,
le premier disque d'entraînement et le second disque d'entraînement (6, 8) sont couplés mécaniquement,
le second arbre d'entraînement (7) est, quant à lui également en liaison fonctionnelle sur son premier côté avec le commutateur à gradins en charge ou l'ajusteur de tension (11) et peut être relié à la transmission d'indication (30) par son second côté,
la transmission d'indication (30) coopère avec un indicateur de position (4) au moyen duquel la position actuellement branchée du commutateur à gradins en charge ou de l'ajusteur de tension (11) peut être représentée,
**caractérisé en ce qu'**
il est prévu un dispositif d'accouplement commutable (14) entre l'indicateur de position (4) et la transmission de charge (2).

2. Entraînement motorisé conforme à la revendication 1,
dans lequel le dispositif d'accouplement (14) est réalisé pour pouvoir être branché de sorte que, à l'état découplé, l'indicateur de position (4) soit séparé cinématiquement du mouvement de rotation amorcé par moteur d'entraînement (3), et qu'à l'état couplé l'indicateur de position (4) soit obligatoirement couplé cinématiquement avec le mouvement de rotation amorcé par le moteur d'entraînement (3).

3. Entraînement motorisé conforme à la revendication 1 et 2,
dans lequel le dispositif d'accouplement (14) comporte un premier pignon d'accouplement (24) monté solidairement en rotation sur un arbre d'amorçage (17), un second pignon d'accouplement (26) monté solidairement en rotation et parallèlement au premier pignon d'accouplement (24) sur un arbre d'entraînement (25), et un goujon d'accouplement (28) monté parallèlement à l'arbre d'amorçage (17) et mobile en translation axiale, équipé d'un troisième pignon d'accouplement (34) monté solidairement en rotation sur le goujon d'accouplement (28) et susceptible d'engrener avec le premier pignon d'accouplement et avec le second pignon d'accouplement (24) ou (26).

4. Entraînement motorisé conforme à la revendication 3,
dans lequel le goujon d'accouplement (28) comporte un ressort de pression (33) monté entre un étrier de retenue (19) et le troisième pignon d'accouplement (34).

5. Entraînement motorisé conforme à l'une des revendications 3 et 4,
dans lequel le goujon d'accouplement (28) peut être déplacé par transmission axiale entre une position d'accouplement dans laquelle le troisième pignon d'accouplement (34) est en liaison d'engrènement avec le premier piston d'accouplement et le second piston d'accouplement (24) et (26) et une position de dégagement dans laquelle le troisième pignon d'accouplement (28) n'est en liaison d'engrènement qu'avec le premier pignon d'accouplement (24).

6. Entraînement motorisé conforme à l'une des revendications 3 à 5, dans lequel le goujon d'accouplement (28) comporte une ouverture (35) accessible de l'extérieur.

7. Entraînement motorisé conforme à l'une des revendications 3 à 6, dans lequel le dispositif d'accouplement (14) comporte un arbre d'amorçage (17) équipé d'un ressort de pression (37) monté entre un élément formant butée (39) et une bague conique (38), un arbre d'entrainement (25) ayant une extrémité en forme de tronc de cône tournée vers la bague conique (38), la bague conique (38) déplaçable par translation entre l'arbre d'amorçage (17) et l'arbre d'entraînement (25) comportant une rainure périphérique (41) ainsi qu'un goujon d'accouplement (28) déplaçable par translation axiale qui vient en prise dans la bague conique (38) au moyen d'une fourchette de liaison (40).

8. Entraînement motorisé conforme à la revendication 7, dans lequel la bague conique (38) est réalisée sous la forme d'un moyeu de serrage.

9. Entraînement motorisé conforme à l'une des revendications 7 et 8, dans lequel l'arbre d'entraînement (25) est réalisé sous la forme d'un arbre conique.

10. Entraînement motorisé conforme à l'une des revendications 7 à 9 dans lequel le goujon d'accouplement (28) est mobile en translation axiale entre une position d'accouplement dans laquelle la bague conique (38) est en liaison par friction avec l'extrémité en forme de tronc de cône de l'arbre d'entraînement (25) et une position de dégagement dans laquelle la bague conique (38) est déplacée en direction de la butée (39) au moyen de la fourchette de liaison (40) de sorte que la liaison par friction soit dégagée.

11. Entraînement motorisé conforme à l'une des revendications 7 à 10 dans lequel il est prévu dans la bague conique (38) un évidement (43) dans lequel vient en prise un goujon (42) monté sur l'arbre d'amorçage (17) de sorte qu'en cas de rotation de l'arbre d'amorçage (17), ce goujon (42) transmette le couple de rotation à la bague conique (38) du fait que le goujon (42) s'appuie par sa surface enveloppe externe sur la face interne de l'évidement (43).
